(19) Europäisches Patentamt / European Patent Office / Office européen des brevets

(11) **EP 2 525 506 A1**

(12) **EUROPEAN PATENT APPLICATION**
published in accordance with Art. 153(4) EPC

(43) Date of publication:
**21.11.2012 Bulletin 2012/47**

(21) Application number: **10842824.4**

(22) Date of filing: **12.01.2010**

(51) Int Cl.:
***H04B 7/04*** *(2006.01)*

(86) International application number:
**PCT/CN2010/070139**

(87) International publication number:
**WO 2011/085540 (21.07.2011 Gazette 2011/29)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Fujitsu Limited**
**Kawasaki-shi, Kanagawa 211-8588 (JP)**

(72) Inventors:
- **ZHANG, Yi**
  **Beijing 100025 (CN)**
- **ZHANG, Yuantao**
  **Beijing 100025 (CN)**

- **ZHOU, Hua**
  **Beijing 100025 (CN)**
- **TIAN, Jun**
  **Beijing 100025 (CN)**
- **WU, Jianming**
  **Beijing 100025 (CN)**

(74) Representative: **Stebbing, Timothy Charles et al**
**Haseltine Lake LLP**
**5th Floor, Lincoln House**
**300 High Holborn**
**London, Greater London WC1V 7JH (GB)**

(54) **METHOD AND DEVICE FOR FEEDING BACK SPATIAL CHANNEL STATE**

(57)     A method for feeding back spatial channel state and a device for feeding back spatial channel state are disclosed by the invention. The method for feeding back spatial channel state according to an embodiment of the present invention includes: determining the probability of being scheduled of the spatial channel; determining feedback information based on the probability of being scheduled of the spatial channel; and transmitting the determined feedback information; wherein more feedback information is used for the spatial channel having high probability of being scheduled than that of the spatial channel with low probability of being scheduled.

Figure 4

EP 2 525 506 A1

## Description

TECHNICAL FIELD

The present invention generally relates to transmission technology in a communication system, and more particularly, to a method for feeding back spatial channel state and a device thereof.

BACKGROUND

The LTE-A (Long Term Evolution-Advanced) scheme of next generation wireless communication system of 3GPP requires a peak rate of 1Gps and a peak spectral efficiency of 30bps/Hz to be provided by a downlink, which brings a challenge to a physical layer transmission scheme of a system. The MIMO (Multiple Input Multiple Output) communication system spatially multiplexes channels and increases spectral efficiency of a system. However, only using the single-user MIMO technology cannot meet requirements of ITU (International Telecommunications Union) under any testing scenario, which requires more advanced technology to be adopted by a physical layer. MU-MIMO (Multiple-user MIMO) technology is one of candidate technologies. In a MU-MIMO system, a base station transmits multiple data streams of different users using the same time-frequency resources. It can sufficiently utilize multi-user broadcast channel capacity, obtain spatial multi-dimension user diversity gain, and meet requirements of a LTE-A system better.

In a downlink MU-MIMO system, a base station transmits multiple data streams occupying the same time-frequency resources to multiple different users. Aliasing of data of different users occurs during spatial transmission, while each mobile station doesn't know spatial channels of other users when processing aliasing data, which requires that the MU-MIMO system suppresses the interference among multiple users at the end of the base station. The ZF-BF (Zero-Forcing Beam-Forming) technology is such kind of technology for suppressing multi-user interference, which adopts zero-forcing precoding at the end of the base station to eliminate inter-user interference.

The procedure of ZF-BF is as follows. Assuming that a base station has $M_t$ transmitting antennas and one receiving antenna and a multi-user MIMO system transmits data of K users simultaneously. The spatial channels of the base station and each mobile station *are* $H_k = [H_{1,1}$ $H_{1,2} \cdots H_{1,M}]^T$, and then the spatial channels constituted by the base station and all the mobile stations are **H** = $[\mathbf{H}_1 \mathbf{H}_2 \cdots \mathbf{H}_K]^T$. The base station can conduct beamforming according to the following zero-forcing precoding matrix:

$$\mathbf{G} = \mathbf{H}^H (\mathbf{H}\mathbf{H}^H)^{-1} \qquad (1)$$

Considering the problem of actual transmitting power of an antenna, a receiving end also need to conduct power normalization to ensure power balance of transmitting antennas. If a power normalization matrix is expressed as P, it is a diagonal matrix, in which each diagonal element $p_{k,k} = \sqrt{\dfrac{P}{K} \dfrac{1}{\|\mathbf{G}_k\|^2}} \left(1 \le k \le K\right)$,

wherein $\|G_k\|^2$ represents a sum of squares of module values of elements in the kth column.

A signal $Y = [Y_1, Y_2, \cdots, Y_K]^T$ *received* by all the users can be expressed as:

$$\mathbf{Y} = \mathbf{H}\mathbf{G}\mathbf{P}\mathbf{S} + \mathbf{N} \qquad (2)$$

Wherein S is data transmitted by all the users, and N is a received noise signal. The following can be obtained by substituting the formula (1) into the formula (2):

$$\mathbf{Y} = \mathbf{P}\mathbf{S} + \mathbf{N} \qquad (3)$$

Because P is a diagonal matrix, inter-user interference is eliminated.

When H is non-full-rank, P will cause a problem of energy allocation imbalance among channels. When a system works at a low signal to interference noise ratio, it will affect system performance greatly. A regularization ZF-BF scheme is raised against this problem, which adopts the following precoding matrix to conduct beamforming:

$$\mathbf{G} = \mathbf{H}^H (\mathbf{H}\mathbf{H}^H + \dfrac{K}{\sigma^2} \mathbf{I}_{M_t})^{-1} \qquad (4)$$

It maximizes a signal to interference noise ratio of a receiving end by introducing a little inter-user interference, thereby increasing system performance.

As for a multiuser MIMO system with multiple receiving antennas, if each user adopts a singular value decomposition receiver, an equivalent spatial channel corresponding to each user is a right singular vector after a singular value decomposition of an actual spatial channel $H_k$. All the equivalent spatial channels under scheduling can constitute a similar equivalent channel H, and subsequent ZF-BF procedure and regularization ZF-BF procedure are the same as those in case of single receiving antenna.

In addition, in a LTE-A system, DM-RS (Demodulated Reference Signals) are provided, which can ensure that a receiving end realizes decoding without knowing a precoding matrix (vector). This characteristic simplifies realization of ZF-BF of advanced precoding technology. This technology eliminates interference of data streams of different users at the transmitting end and utilizes multiuser broadcast channel capacity more sufficiently. Many modified ZF-BF technology are also discussed by normalization organizations, such as regularization ZF-BF technology and block diagonal ZF-BF technology. All these beamforming schemes require that channel state information is known at a transmitting end. In a FDD (Frequency Division Duplex) system, channel state information can be transmitted by feed back of a receiving end.

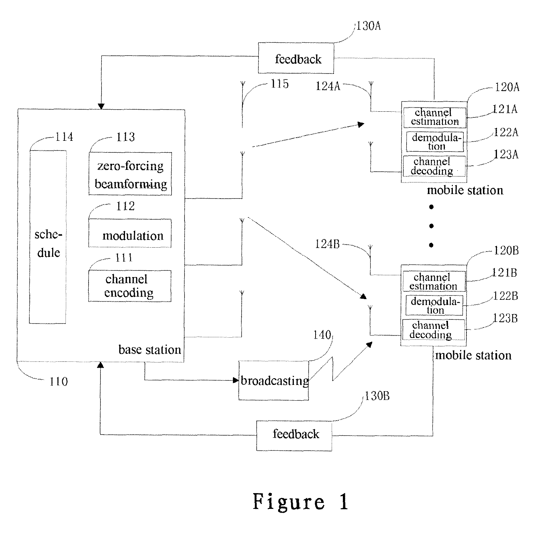

Figure 1 shows a schematic diagram of structure of a ZF-BF multiuser MIMO system. The base station 110 determines users that can transmit data and transmission resource used by them by the scheduling module 114. Data of a user being scheduled is processed by the channel encoding module 111, the modulation module 112, and the ZF-BF module 113, and then is mapped onto allocated time-frequency transmission resource and is transmitted out from an antenna module 115.

A transmitted signal arrives at multiple mobile stations 120A and 120B after different channel transmission. Each mobile station conducts a similar processing. Hereinafter, explanation will be made with the mobile station 120A as an example.

The mobile station 120A receives a transmitted signal using a receiving antenna 124A. A channel estimation module 121A obtains channel state information according to a received reference signal. A demodulation module 122A performs symbol decoding on a received data signal according to the estimated channel state information. A channel decoding module 123A in turn performs bit level decoding on the result of the symbol decoding, and finally obtains bit information of a transmitting end.

The base station 110 needs to know channel state information when performing the processing of scheduling 114 and ZF-BF 113, which is provided by mobile station feedback modules 130A and 130B with various mobile stations conducting this independently to each other. The base station 110 notifies the mobile stations of some information on transmission through a broadcasting module 140.

Feedback contents comprise spatial channel direction information and corresponding channel quality indicator (CQI), and the feedback portion representing channel direction can adopt a form of channel correlation matrix or channel direction information (CDI). When feeding back the CDI, a codebook is adopted to conduct quantization, which has a smaller feedback amount and realizes good compromise of system capacity performance and feedback overhead better.

However, the LTE-A system at most supports eight antennas at a transmitting end and four antennas at a receiving end and can at most correspond to four channel direction vectors, which still need to feedback large amount of information. This needs to further reduce feedback redundancy and enhance practicality of ZF-BF multiuser MIMO technology in the LTE-A.

It should be noted that the above explanation of regular technology only is made for convenience of clear and complete explanation of technical solutions of the prevent invention and for convenience of understanding of those skilled in the art. It should not be conceived that the above technical solutions are well known by those skilled in the art only because these solutions are stated in the portion of background of the present invention.

References of the present invention are listed as follows, which are incorporated herein by reference as having been described in detail in the present specification.

1. [patent document 1]: ZIFENG YU, et al., Method and device for quantizing multiuser MIMO system channel based on limiting feedback (CN 20081038205) ;

2. [patent document 2]: Zhang Wei, et al., Multiuser scheduling for MIMO broadcast channels with finite rate feedback (WO 2009040678 A2) ;

3. [patent document 3]: Jayakrishnan C. Mundarath, et al., Multiuser MIMO-SDMA for finite rate feedback systems (US 20080165875 A1) ;

4. [patent document 4]: Myeon-kyun CHO, et al., Apparatus and method for scheduling multiuser/single user in multiple input multiple output (MIMO) system (US 20080025336 A1):

5. [patent document 5]: Jun Zheng, et al., Method and system for a simplified user group selection scheme with finite-rate channel state information feedback for FDD multiuser MIMO downlink transmission (US 20070064829 A1);

6. [non-patent document 1]: T. Yoo, N. Jandel, A. Goldsmth, "Multiple-antenna downlink channels with limited feedback and user selection, "IEEE J. Select. Areas Commun., Vol. 25, pp. 1478-1491, Sep. 2007 ;

7. [non-patent document 2]: 3GPP R1-062483. Philips, "Comparison between MU-MIMO codebook-based channel reporting techniques for LTE downlink," 3GPP TSG RAN WG1 Meeting #46bis ;

8. [non-patent document 3]: 3GPP R1-070223. Freescale Semiconductor Inc., "Scheme for MU-MIMO in DL EUTRA," 3GPP TSG RAN WG1 Meeting #47bis.

SUMMARY OF THE INVENTION

In view of the above, the present invention considers the probability of being scheduled of a user spatial channel during feedback. More feedback bits are used for a spatial channel having a higher scheduling probability, such as adopting a higher resolution codebook to make a CDI quantization, while less feedback bits are used for a spatial channel having a lower scheduling probability, such as adopting a lower resolution codebook to make a CDI quantization. Moreover, as for a spatial channel having a very low scheduling probability, corresponding CDI and CQI are not fed back. The scheduling probability of a certain user spatial channel is particularly characterized by a ratio of an eigenvalue of each spatial channel to a maximum eigenvalue.

Particularly, according to an aspect of the present invention, there is provided a method for feeding back spatial channel state comprising: determining a probability of being scheduled of a spatial channel; determining feedback information according to the probability of being scheduled of the spatial channel; and transmitting the determined feedback information; wherein more feedback information is used for a spatial channel having a high probability of being scheduled than that for a spatial channel having a low probability of being scheduled.

The feedback information may comprise an indicator of channel direction vector number and used codebook, a spatial channel direction vector indicator and a spatial channel quality indicator.

According to one embodiment of the present invention, the determining the probability of being scheduled of the spatial channel comprises: obtaining a spatial channel matrix H through channel estimation; conducting a singular value decomposition for the spatial channel matrix H; arranging singular values $\sigma_1 \geq \sigma_2 \geq \cdots \geq \sigma_L$ in a descending order, wherein L indicates a number of antennas of a mobile station; and calculating respectively

$$\frac{\sigma_i}{\sigma_1}\left(1 \leq i \leq L\right)$$ as the probability of being scheduled of each spatial channel.

In addition, a method for feeding back spatial channel state according to one embodiment of the present invention also comprises receiving threshold intervals used by various codebooks from a broadcasting channel. In this case, the determining the feedback information according to the probability of being scheduled of the spatial channel comprises: determining a quantization codebook adopted by each spatial channel direction vector according to the value of $\frac{\sigma_i}{\sigma_1}\left(1 \leq i \leq L\right)$ and the threshold intervals used by various codebooks received from the broadcasting channel; and determining the indicator of channel direction vector number and used codebook according to the determined quantization codebook adopted by each spatial channel direction vector.

Preferably, a high resolution codebook is used for quantization for a spatial channel direction vector with a large value of $\frac{\sigma_i}{\sigma_1}\left(1 \leq i \leq L\right)$, and a low resolution codebook is used for quantization for a spatial channel direction vector with a small value of $\frac{\sigma_i}{\sigma_1}\left(1 \leq i \leq L\right)$.

The quantization codebook may be a DFT matrix codebook, a random quantization codebook, a Grassamannian codebook, or a norm codebook designed for a single-user system in the LET system, etc.

Moreover, according to one embodiment of the present invention, the determining the feedback information according to the probability of being scheduled of the spatial channel further comprises: calculating a right singular vector $\{V_1, V_2,..., V_L\}$ of the spatial channel matrix H; selecting, according to each spatial direction vector $V_i$ ($1 \leq i \leq L$) and the determined respective quantization codebook, from a quantization codebook collection C, a vector $\hat{C}_j$ having a smallest angle with the spatial direction vector $V_i$ as the spatial channel direction vector indicator needed to be fed back for each spatial channel in the feedback information; and obtaining the spatial channel quality indicator needed to be fed back for each spatial channel in the feedback information according to the singular value $\sigma_i$ ($1 \leq i \leq L$), the right singular vector $V_i$ ($1 \leq i \leq L$) and the quantization codebook C of each spatial channel.

Preferably, the feedback information corresponding to a spatial channel having a lowest scheduling probability is not transmitted.

According to a method for feeding back spatial channel state of one preferred embodiment of the present invention, all of various spatial channel direction vectors adopt one quantization codebook; if the value of

$$\frac{\sigma_i}{\sigma_1}\left(1 \leq i \leq L\right)$$ is less than the threshold interval received from the broadcasting channel, information of this spatial channel is not quantized, and the spatial channel direction vector indicator and the spatial channel quality indicator of this spatial channel are not fed back; and the indicator of channel direction vector number and used codebook as the feedback information only indicates a number of spatial channels needed to be fed back.

The determined feedback information may be transmitted through a physical uplink control channel or a periodic/nonperiodic physical uplink shared channel.

According to another aspect of the present invention, a device for feeding back spatial channel state is provided, comprising: a scheduling probability determination unit configured for determining a probability of being scheduled of a spatial channel; a feedback information determination unit configured for determining feedback information according to the probability of being scheduled of the spatial channel; and a transmission unit configured for transmitting the determined feedback information; wherein more feedback information is used for a spatial channel having a high probability of being scheduled than that for a spatial channel having a low probability of being scheduled.

It can be seen that, in comparison with traditional methods and devices for spatial channel feedback, the method and device for feeding back spatial channel state according to the present invention reduce feedback information of a spatial channel having a lower scheduling probability, further eliminate redundancy feedback, and realize better compromise of system capacity performance and feedback overhead.

Moreover, a computer program for realizing the above method for feeding back spatial channel state is also provided by the present invention.

In addition, at least a computer program product in form of computer readable medium is also provided by the present invention, on which computer program codes for realizing the above method for feeding back spatial channel state are recorded.

BRIEF DESCRIPTION OF THE DRAWINGS

Many aspects of the present invention can be understood better with reference to the following drawings. The parts in the drawings are not drawn proportionally, but are only used for illustrating the principle of the present invention. For the convenience of illustrating and describing some portions of the present invention, corresponding portions in the drawings may be amplified, i.e., may become larger relative to other parts in an exemplary device actually made according to the present invention. Elements and characteristics described in one drawing or one embodiment of the present invention can be combined with elements and characteristics shown in one or more other drawing or embodiment. In addition, in the drawings, similar reference signs refer to corresponding parts in several drawings, and can be used for indicating corresponding parts used in more than one embodiment. In the drawings:

> Fig. 1 illustratively shows a structural block diagram of a ZF-BF multiuser MIMO system which reduces feedback overhead;
> Fig. 2 illustratively shows a schematic diagram of a method for feeding back spatial channel state according to one embodiment of the present invention;
> Fig. 3 illustratively shows a structural diagram of feedback contents of each mobile station according to one embodiment of the present invention;
> Fig. 4 shows in detail a flow chart of a method for feeding back spatial channel state realized by each mobile station according to one embodiment of the present invention;
> Fig. 5 illustratively shows a schematic diagram of codebook selection; and
> Fig. 6 shows a block diagram of a device for feeding back spatial channel state according to one embodiment of the present invention.

DESCRIPTION OF THE PREFERRED EMBODIMENTS

Hereinafter, embodiments of the present invention will be described with reference to the attached drawings. Elements and characteristics described in one drawing or one embodiment of the present invention can be combined with elements and characteristics shown in one or more other drawing or embodiment. It should be noted that, for the purpose of clarity, representation and description of parts and processes which are not related to the present invention and are known to those skilled in the art have been omitted in the attached drawings and the description.

The method and device for feeding back spatial channel state according to the present invention firstly determine a probability of being scheduled of a spatial channel, subsequently determine feedback information according to the probability of being scheduled of the spatial channel, and finally transmit the determined feedback information. Among others, more feedback information is used for a spatial channel having a high probability of being scheduled than that for a spatial channel having a low probability of being scheduled.

That is, the present invention raises a method and device for reducing feedback overhead by using scheduling information. It is suitable for a ZF-BF multiuser MIMO communication system. Interval thresholds for different quantization codebook used by each user are broadcasted at a base station end. At a user end, according to an interval which a ratio of channel eigenvalues falls in, a corresponding codebook is selected for quantization of a channel direction vector, and respective channel direction vector indicator (CDI), channel quality indicator (CQI) and indicator of channel direction vector number and used codebook (NCI) are fed back. Particularly, when eigenvalues of some channel direction vectors is far less than a maximum eigenvalue, their corresponding spatial channels are less likely to be suitable for scheduling of the base station. Therefore, CDI and CQI reflecting such spatial channel information need not be fed back. This feedback method reduces feedback redundancy according to scheduling requirements and significantly reduces feedback amount at a user end under the premise of not affecting a system throughput.

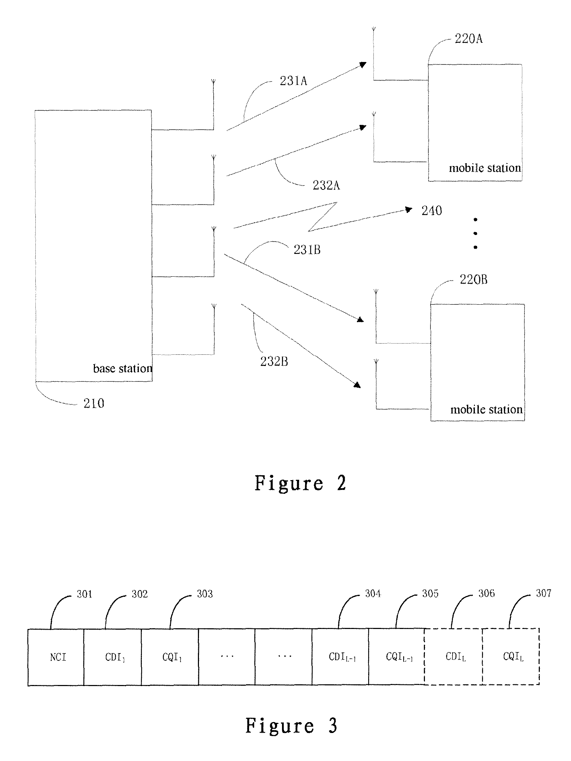

Hereinafter, basic work principle of a method for feeding back spatial channel state according to an embodiment of the present invention will firstly be described with reference to figures 2-5.

Figure 2 illustratively shows a schematic diagram of a method for feeding back spatial channel state according to one embodiment of the present invention. The base station 210 notifies each mobile station 220A, 220B of related scheduling information or changed forms of the scheduling information through the broadcasting channel 240. In the present embodiment, the base station 210 broadcasts a threshold interval of a codebook used by a mobile station for CDI quantization, which can be adjusted correspondingly according to the scheduling information. For example, when a scheduling priority of a certain user is high, the threshold interval is adjusted such that a higher resolution codebook is adopted during spatial channel quantization. The mobile stations receive broadcasting information to be used at the time of CDI quantization.

A signal of the base station 210 is transmitted to each mobile station 220A, 2208, etc., of which equivalent spatial channels are respectively 231A, 232A and 231B, 232B, etc. As for the mobile station 220A, if the equivalent spatial channel 231A has a larger probability of being used than 232A, larger feedback amount is adopted for the fed back spatial channel information. As for the CDI information, a higher resolution codebook is adopted for quantization. In the present embodiment, a direction vector of an equivalent spatial channel is expressed using a right singular vector of a spatial channel matrix, and quality of an equivalent spatial channel is expressed using an eigenvalue of a corresponding direction vector. As for a certain user, a probability of being scheduled of a spatial channel is characterized by a ratio of an eigenvalue corresponding to this spatial channel to a maximum eigenvalue. A mobile station determines the codebook used at the time of CDI information quantization in accordance with the received broadcast threshold.

Figure 3 illustratively shows a structural drawing of feedback contents of each mobile station according to one embodiment of the present invention. As shown in figure 3, the feedback contents comprise the three portions of: (1) an indicator of channel direction vector number and used codebook (NCI) 301; (2) a channel direction vector indicator (CDI) 302, 304, 306; (3) a channel quality indicator (CQI) 303, 305, 307.

The first portion 301 is used for indicating a number of fed back channel direction vector and a codebook used for each direction at the time of quantization, which can be indicated using a method of bit mapping. For example, for a certain user, the system has L spatial channels in all, each of which can adopt M resolution codebooks (comprising one null codebook corresponding to the case of no need for feedback quantization) to conduct quantization, and NCI needs $\log_2 (M^{L-1})$ bits for indication (a quantization codebook of a channel vector having a maximum eigenvalue doesn't need to be indicated, which corresponds to a highest resolution codebook).

One preferred embodiment according to the present invention particularly pays attention to one simple and practical case, i.e., each mobile station only has one feedback codebook. At this time, NCI only needs to indicate a number of a spatial channel conducting codebook quantization, which only needs $\log_2 (L)$ bits for indication. Obviously, the feedback amount at a user end can be significantly reduced.

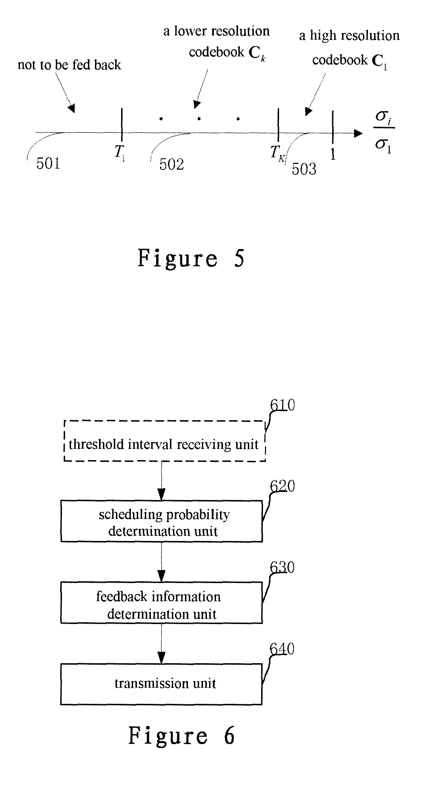

CDI 302, 304 and 306 respectively adopt a respective codebook to conduct quantization for a right singular vector of a channel matrix, and the particular method for codebook selection will be explained in detail in the portion about figure 5.

CQI 303, 305 and 307 can be obtained according to traditional zero-forcing MU-MIMO methods, which can adopt a form of feeding back a quantized signal to interference noise ratio at a receiving end or order of modulation coding. Refer to the calculation methods given in the above listed reference documents 7 and 8 for the particular algorithm of CQI, and the detail description thereof is omitted herein.

It particularly needs to be pointed out that CDI 306 and CQI 307 are indicated by dotted lines in figure 3, which means that the information of these spatial channels is not necessarily to be fed back.

This feedback information can be transmitted through a physical uplink control channel or a periodic/nonperiodic physical uplink shared channel.

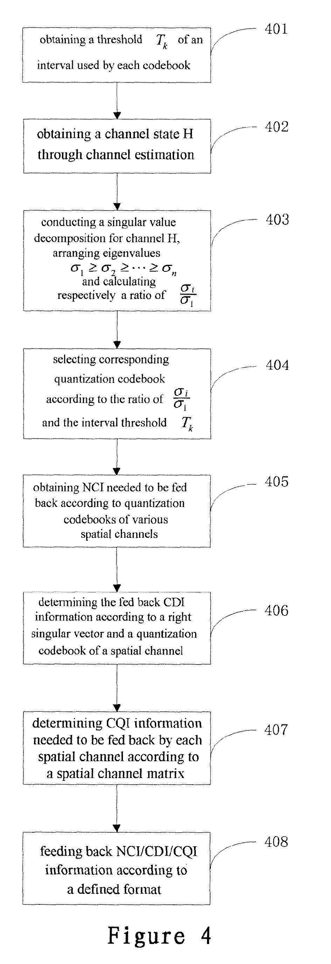

A flowchart of a method for feeding back spatial channel state realized by each mobile station according to one embodiment of the present invention will be described below in detail in combination with figure 4.

As shown in figure 4, the mobile station firstly receives threshold intervals used by various codebooks from a broadcasting channel at step 401.

Next, at step 402, the downlink channel state information is estimated according to a received reference signal.

In step 403, the singular value decomposition is conducted for the spatial channel matrix H, and singular values $\sigma_1 \geq \sigma_2 \geq \cdots \geq \sigma_L$ and a right singular vector $\{V_1, V_2, \cdots, V_L\}$ are arranged in a descending order, wherein $L = M_r$, $M_r \leq M_t$, $M_r$ and $M_t$ represent respectively the number of receiving antennas and transmitting antennas, and the number of antennas of mobile station $M_r$ is less than the number of antennas of base station

$$M_t . \quad \frac{\sigma_i}{\sigma_1}\left(1 \leq i \leq L\right) \quad \text{are calculated respectively as}$$

criterions for selecting a quantization codebook.

Subsequently, in step 404, a quantization codebook adopted by each spatial channel direction vector is determined according to the ratio of $\dfrac{\sigma_i}{\sigma_1}$ and the threshold interval obtained in step 401. According to one embodiment of the present invention, a feature vector having a maximum singular value $\sigma_1$ adopts fixedly a high resolution codebook to conduct quantization. The quantization codebook can adopt multiple forms of a DFT matrix codebook, a random quantization codebook, a Grassamannian codebook, a norm codebook designed for a single-user system in the LTE system, etc.

Next, in step 405, NCI is determined according to a quantization codebook for each spatial direction vector. Refer to the above detail description in combination with figures 2 and 3 for the particular method for determining NCI, which is omitted herein.

Then, in step 406, according to each spatial direction vector $V_i$ $(1 \leq i \leq L)$ and the selected quantization codebooks, vectors $\hat{\mathbf{C}}_j$ having a smallest angle with the spatial direction vector $V_i$ are selected respectively from a codebook collection C, i.e.

$$\hat{\mathbf{C}}_j = \underset{1 \leq j \leq K}{\arg\max} \left\{ \mathbf{C}_j^H \mathbf{V}_i \right\},$$ wherein K indicates a number of codebook collection. The quantization indications thereof are CDI needed to be fed back for each spatial channel.

Next, in step 407, a CQI needed to be fed back for each spatial channel is obtained in accordance with a traditional ZF-BF CQI calculation method (please refer to the calculation method given in the above listed references 7 and 8) according to the singular value $\sigma_i$ $(1 \leq i \leq L)$ of each spatial channel, the right singular vector $V_i$ $(1 \leq i \leq L)$ and the quantization codebook C.

Finally, in step 408, the NCI obtained in step 405, the CDI of each spatial channel obtained in step 406, and the CQI of each spatial channel obtained in step 407 are fed back to a base station in a feedback form shown in figure 3 through a physical uplink control channel or a periodic/nonperiodic physical uplink shared channel, etc.

Figure 5 illustratively shows a schematic diagram of codebook selection of each spatial channel. A mobile station obtains thresholds $T_1, \cdots, T_K$ $(T_1 \leq T_2 \leq \cdots \leq T_K)$ for selecting quantization codebooks through a broadcasting channel. The thresholds divide a value range of a parameter characterizing a scheduling probability into multiple intervals 501, 502 and 503, wherein the interval 501 corresponds to a lowest scheduling probability and the corresponding spatial channel information is not fed back; the interval 502 corresponds to a lower scheduling probability and corresponding spatial direction vector is quantized using a lower resolution codebook; and the interval 503 corresponds to a higher scheduling probability and corresponding spatial direction vector is quantized using a higher resolution codebook.

Particularly, if only one threshold is used by the system, in case of the parameter characterizing scheduling being no less than the threshold, it means that this spatial vector needs to be quantized using a codebook; otherwise, it means that this spatial channel information does not need to be fed back. In the particular example, the parameter characterizing a scheduling probability is a ratio of an eigenvalue of the spatial channel to a largest eigenvalue.

The above describes the method for feeding back spatial channel state according to a particular embodiment of the present invention in combination with figures 2-5, and a device for feeding back spatial channel state according to one embodiment of the present invention will be described below in combination with figure 6.

As shown in figure 6, the device for feeding back spatial channel state according to this embodiment comprises a threshold interval receiving unit 610, a scheduling probability determination unit 620, a feedback information determination unit 630, and a transmission unit 640.

The threshold interval receiving unit 610 is configured for receiving threshold intervals used by various codebooks from a broadcasting channel. Here, the threshold interval receiving unit 610 is an optional configuration. In fact, a mobile station can also determine the threshold intervals by itself.

The scheduling probability determination unit 620 is configured for determining a probability of being scheduled of a spatial channel, the feedback information determination unit 630 is configured for determining feedback information according to the probability of being scheduled of the spatial channel, and the transmission unit 640 is configured for transmitting the determined feedback information. In a particular example according to the present invention, more feedback information is used for a spatial channel having a high probability of being scheduled than that for a spatial channel having a low probability of being scheduled.

Here, the feedback information to be transmitted can comprise an indicator of channel direction vector number and used codebook, a spatial channel direction vector indicator, and a spatial channel quality indicator, etc.

According to one preferred embodiment of the present invention, when determining a probability of being scheduled of a spatial channel, the scheduling probability determination unit 620 obtains a spatial channel matrix H through channel estimation, conducts a singular decomposition for the spatial channel matrix H, and then arranges the singular values $\sigma_1 \geq \sigma_2 \geq \cdots \geq \sigma_L$ in a descending order and calculates respectively

$$\frac{\sigma_i}{\sigma_1} \left( 1 \leq i \leq L \right)$$ as a probability of being scheduled of each spatial channel, wherein L indicates a number of antennas of a mobile station.

After the scheduling probability determination unit 620 has determined the probability of being scheduled of a spatial channel, the feedback information determination unit 630 determines a quantization codebook used for each spatial channel direction vector according to the value of $\dfrac{\sigma_i}{\sigma_1} \left( 1 \leq i \leq L \right)$ and the threshold intervals used for various codebooks received from a broadcasting channel. Then, the feedback information determination unit 630 determines an indicator of channel direction vector number and used codebook according to the determined quantization codebook used for each spatial channel direction vector.

Preferably, the feedback information determination unit 630 conducts quantization using a high resolution codebook for a spatial channel direction vector with a large value of $\dfrac{\sigma_i}{\sigma_1}\left(1 \le i \le L\right)$, and conducts quantization using a low resolution codebook for a spatial channel direction vector with a small value of

$$\frac{\sigma_i}{\sigma_1}\left(1 \le i \le L\right).$$

The quantization codebook used herein can be multiple forms of a DFT matrix codebook, a random quantization codebook, a Grassamannian codebook, and a norm codebook designed for a single-user system in the LTE system, etc.

As stated above, after the indicator of channel direction vector number and used codebook (NCI) in the feedback information has been determined, the feedback information determination unit 630 calculates the right singular vector $\{V_1, V_2, \cdots, V_L\}$ of the spatial channel matrix H, and selects, according to each spatial direction vector $V_i\,(1 \le i \le L)$ and the determined respective quantization codebook, from the quantization codebook collection C, a vector $\hat{C}_j$ having a smallest angle with the spatial direction vector $V_i$ as the channel direction vector indicator (CDI) needed to be fed back for each spatial channel in the feedback information.

In addition, the feedback information determination unit 630 also obtains the channel quality indicator (CQI) needed to be fed back for each spatial channel in the feedback information according to a singular value $\sigma_i\,(1 \le i \le L)$, the right singular vector $V_i\,(1 \le i \le L)$ and the quantization codebook C of each spatial channel.

Particularly, the feedback information corresponding to a spatial channel having a lowest scheduling probability is not transmitted.

According to one preferred particular example of the present invention, all of various spatial channel direction vectors adopt one quantization codebook. At this time, if the value of $\dfrac{\sigma_i}{\sigma_1}\left(1 \le i \le L\right)$ is less than a threshold interval received from a broadcasting channel, the information of this spatial channel is not quantized and the spatial channel direction vector indicator and the spatial channel quality indicator of this spatial channel is not fed back. In this case, the indicator of channel direction vector number and used codebook as the feedback information only indicates the number of spatial channel needed to be fed back, which can greatly eliminate the feedback redundancy of spatial channel.

Finally, the transmission unit 640 feeds back the NCI, CDI and CQI determined by the feedback information determination unit 630 to a base station in the form shown in figure 3 through a physical uplink control channel or a periodic/nonperiodic physical uplink shared channel. Of course, all of various spatial channel direction vectors adopt one quantization codebook, and the transmission unit 640 only needs to transmit the number of spatial channels needed to be fed back, which realizes feedback redundancy of a spatial channel and increases system performance.

It should be pointed out that the method and device for feeding back spatial channel state according to the present invention are also applicable to a modified ZF-BF multiuser MIMO system, such as a regularized ZF-BF multiuser MIMO system. Moreover, the method and device for feeding back spatial channel state according to the present invention is also applicable to a wireless communication system such as Wimax.

As described above in detail, the present invention considers the probability of being scheduled of a user spatial channel during feedback. The scheduling probability is utilized for layering quantization for a spatial channel, which further eliminates feedback redundancy of a spatial channel and realizes a good compromise of a system capacity performance and a feedback overhead. Moreover, for a certain mobile station, it doesn't know the spatial channel direction information of other mobile stations. The ratio of an eigenvalue of each spatial channel to a maximum eigenvalue can better reflect such a probability of being scheduled of a spatial channel, and the method of adjusting a level of codebook quantization by this ratio at a mobile station is relatively reasonable.

It also should be pointed out here that, in the above description of the particular embodiments of the present invention, features described and/or shown for one embodiment can be used in one or more other embodiment in a same or similar manner, be combined with a feature in other embodiment, or replace a feature in other embodiment.

It should be emphasized that the term "comprise/include" indicates an existence of a feature, an element, a step or a component when being used in the Description, but the existence or attachment of one or more other feature, element, step or component is not excluded.

In addition, the method of the present invention is not limited to be performed in chronological sequence described in the Description, but can be performed in other chronological sequence, in parallel or independently. Thus, the performing sequence of the method described in this Description does not constitute a limit to the technical range of the present invention.

Although the present invention has been disclosed above by the description of particular embodiments of the present invention, it should be understood that those skilled in the art can design various modifications, changes or equivalency thereof for the present invention within the spirit and scope of the attached claims. These modifications, changes and equivalency thereof should also be considered as being comprised within the protection scope of the present invention.

Annexes:

Annex 1. A method for feeding back spatial channel state, comprising:

> determining a probability of being scheduled of a spatial channel;
> determining feedback information according to the probability of being scheduled of the spatial channel; and
> transmitting the determined feedback information;
> wherein more feedback information is used for a spatial channel having a high probability of being scheduled than that for a spatial channel having a low probability of being scheduled.

Annex 2. The method for feeding back spatial channel state according to annex 1, wherein the feedback information comprises an indicator of channel direction vector number and used codebook, a spatial channel direction vector indicator and a spatial channel quality indicator.

Annex 3. The method for feeding back spatial channel state according to annex 2, wherein the determining the probability of being scheduled of the spatial channel comprises:

> obtaining a spatial channel matrix H through channel estimation;
> conducting a singular value decomposition for the spatial channel matrix H;
> arranging singular values $\sigma_1 \geq \sigma_2 \geq \cdots \geq \sigma_L$ in a descending order, wherein L indicates a number of antennas of a mobile station; and
>
> calculating respectively $\dfrac{\sigma_i}{\sigma_1}\left(1 \leq i \leq L\right)$ as
>
> the probability of being scheduled of each spatial channel.

Annex 4. The method for feeding back spatial channel state according to annex 3, further comprising:

> receiving threshold intervals used by various codebooks from a broadcasting channel; and
> wherein the determining the feedback information according to the probability of being scheduled of the spatial channel comprises:
>
>> determining a quantization codebook adopted by each spatial channel direction vector according to the value of

$\dfrac{\sigma_i}{\sigma_1}\left(1 \leq i \leq L\right)$ and the threshold intervals used by various codebooks received from the broadcasting channel; and
determining the indicator of channel direction vector number and used codebook according to the determined quantization codebook adopted by each spatial channel direction vector.

Annex 5. The method for feeding back spatial channel state according to annex 4, wherein a high resolution codebook is used for quantization for a spatial channel direction vector with a large value of

$\dfrac{\sigma_i}{\sigma_1}\left(1 \leq i \leq L\right)$, and a low resolution codebook is used for quantization for a spatial channel direction vector with a small value of $\dfrac{\sigma_i}{\sigma_1}\left(1 \leq i \leq L\right)$.

Annex 6. The method for feeding back spatial channel state according to annex 5, wherein the quantization codebook is a DFT matrix codebook, a random quantization codebook, a Grassamannian codebook, or a norm codebook.

Annex 7. The method for feeding back spatial channel state according to annex 4, wherein the determining the feedback information according to the probability of being scheduled of the spatial channel further comprises:

> calculating a right singular vector $\{V_1, V_2, \cdots, V_L\}$ of the spatial channel matrix H;
> selecting, according to each spatial direction vector $V_i$ ($1 \leq i \leq L$) and the determined respective quantization codebook, from a quantization codebook collection C, a vector $\hat{C}_j$ having a smallest angle with the spatial direction vector $V_i$ as the spatial channel direction vector indicator needed to be fed back for each spatial channel in the feedback information; and
> obtaining the spatial channel quality indicator needed to be fed back for each spatial channel in the feedback information according to the singular value $\sigma_i$ ($1 \leq i \leq L$), the right singular vector $V_i$ ($1 \leq i \leq L$) and the quantization codebook C of each spatial channel.

Annex 8. The method for feeding back spatial channel state according to annex 7, wherein the feedback information corresponding to a spatial channel having a lowest scheduling probability is not transmitted.

Annex 9. The method for feeding back spatial channel state according to annex 7, wherein:

all of various spatial channel direction vectors adopt one quantization codebook;

if the value $\dfrac{\sigma_i}{\sigma_1}\left(1 \le i \le L\right)$ of is less than the threshold interval received from the broadcasting channel, information of this spatial channel is not quantized, and the spatial channel direction vector indicator and the spatial channel quality indicator of this spatial channel are not fed back; and

the indicator of channel direction vector number and used codebook as the feedback information only indicates a number of spatial channels needed to be fed back.

Annex 10. The method for feeding back spatial channel state according to any of annexes 1-9, wherein the determined feedback information is transmitted through a physical uplink control channel or a periodic/nonperiodic physical uplink shared channel.

Annex 11. A device for feeding back spatial channel state, comprising:

   a scheduling probability determination unit configured for determining a probability of being scheduled of a spatial channel;
   a feedback information determination unit configured for determining feedback information according to the probability of being scheduled of the spatial channel; and
   a transmission unit configured for transmitting the determined feedback information;
   wherein more feedback information is used for a spatial channel having a high probability of being scheduled than that for a spatial channel having a low probability of being scheduled.

Annex 12. The device for feeding back spatial channel state according to annex 11, wherein the feedback information comprises an indicator of channel direction vector number and used codebook, a spatial channel direction vector indicator and a spatial channel quality indicator.

Annex 13. The device for feeding back spatial channel state according to annex 12, wherein the scheduling probability determination unit:

   obtains a spatial channel matrix H through channel estimation;
   conducts a singular value decomposition for the spatial channel matrix H;
   arranges singular values $\sigma_1 \ge \sigma_2 \ge \cdots \sigma_L$ in a descending order, wherein L indicates a number of antennas of a mobile station; and

calculates respectively $\dfrac{\sigma_i}{\sigma_1}\left(1 \le i \le L\right)$ as the probability of being scheduled of each spatial channel.

Annex 14. The device for feeding back spatial channel state according to annex 13, further comprising:

   a threshold interval receiving unit configured for receiving threshold intervals used by various codebooks from a broadcasting channel; and
   wherein the feedback information determination unit:

      determines a quantization codebook adopted by each spatial channel direction vector according to the value of $\dfrac{\sigma_i}{\sigma_1}\left(1 \le i \le L\right)$

      and the threshold intervals used by various codebooks received from the broadcasting channel; and
      determines the indicator of channel direction vector number and used codebook according to the determined quantization codebook adopted by each spatial channel direction vector.

Annex 15. The device for feeding back spatial channel state according to annex 14, wherein a high resolution codebook is used for quantization for a spatial channel direction vector with a large value of

$\dfrac{\sigma_i}{\sigma_1}\left(1 \le i \le L\right)$, and a low resolution codebook is used for quantization for a spatial channel direction vector with a small value of $\dfrac{\sigma_i}{\sigma_1}\left(1 \le i \le L\right)$.

Annex 16. The device for feeding back spatial channel state according to annex 15, wherein the quantization codebook is a DFT matrix codebook, a random quantization codebook, a Grassamannian codebook, or a norm codebook.

Annex 17. The device for feeding back spatial channel state according to annex 14, wherein the feedback information determination unit further:

   calculates a right singular vector $\{\mathbf{V}_1, \mathbf{V}_2,..., \mathbf{V}_L\}$ of the spatial channel matrix H;
   selects, according to each spatial direction vector $V_i$ ($1 \le i \le L$) and the determined respective quantization codebook, from a quantization codebook collection C, a vector $\hat{\mathbf{C}}_j$ having a smallest angle with the spatial direction vector

$V_i$ as the channel direction vector indicator needed to be fed back for each spatial channel in the feedback information; and

obtains the channel quality indicator needed to be fed back for each spatial channel in the feedback information according to the singular value $\sigma_i$ *(1 ≤ i ≤ L),* the right singular vector $V_i$ *(1 ≤ i ≤ L)* and the quantization codebook C of each spatial channel.

Annex 18. The device for feeding back spatial channel state according to annex 17, wherein the feedback information corresponding to a spatial channel having a lowest scheduling probability is not transmitted.

Annex 19. The device for feeding back spatial channel state according to annex 17, wherein:

all of various spatial channel direction vectors adopt one quantization codebook;

if the value of $\dfrac{\sigma_i}{\sigma_1}\left(1 \leq i \leq L\right)$ is less than the threshold interval received from the broadcasting channel, information of this spatial channel is not quantized, and the spatial channel direction vector indicator and the spatial channel quality indicator of this spatial channel are not fed back; and

the indicator of channel direction vector number and used codebook as the feedback information only indicates a number of spatial channels needed to be fed back.

Annex 20. The device for feeding back spatial channel state according to any of annexes 11-19, wherein the transmission unit transmitted the determined feedback information through a physical uplink control channel or a periodic/nonperiodic physical uplink shared channel.

**Claims**

1. A method for feeding back spatial channel state, comprising:

determining a probability of being scheduled of a spatial channel;
determining feedback information according to the probability of being scheduled of the spatial channel; and
transmitting the determined feedback information;
wherein more feedback information is used for a spatial channel having a high probability of being scheduled than that for a spatial channel having a low probability of being scheduled.

2. The method for feeding back spatial channel state according to claim 1, wherein the feedback information comprises an indicator of channel direction vector number and used codebook, a spatial channel direction vector indicator and a spatial channel quality indicator.

3. The method for feeding back spatial channel state according to claim 2, wherein the determining the probability of being scheduled of the spatial channel comprises:

obtaining a spatial channel matrix H through channel estimation;
conducting a singular value decomposition for the spatial channel matrix H;
arranging singular values $\sigma_1 \geq \sigma_2 \geq \cdots \geq \sigma_L$ in a descending order, wherein L indicates a number of antennas of a mobile station; and

calculating respectively $\dfrac{\sigma_i}{\sigma_1}\left(1 \leq i \leq L\right)$ as the probability of being scheduled of each spatial channel.

4. The method for feeding back spatial channel state according to claim 3, further comprising:

receiving threshold intervals used by various codebooks from a broadcasting channel; and
wherein the determining the feedback information according to the probability of being scheduled of the spatial channel comprises:

determining a quantization codebook adopted by each spatial channel direction vector according to the value of

$\dfrac{\sigma_i}{\sigma_1}\left(1 \leq i \leq L\right)$ and the threshold intervals used by various codebooks received from the broadcasting channel; and
determining the indicator of channel direction vector number and used codebook according to the determined quantization codebook adopted by each spatial channel direction vector.

5. The method for feeding back spatial channel state according to claim 4, wherein a high resolution codebook is used for quantization for a spatial channel direction vector with a large value of

$\dfrac{\sigma_i}{\sigma_1}\left(1 \leq i \leq L\right)$, and a low resolution codebook is used for quantization for a spatial channel direction vector with a small value of $\dfrac{\sigma_i}{\sigma_1}\left(1 \le i \le L\right)$.

6. The method for feeding back spatial channel state according to claim 4, wherein all of various spatial channel direction vectors adopt one quantization codebook;

if the value $\dfrac{\sigma_i}{\sigma_1}\left(1 \le i \le L\right)$ of is less than the threshold interval received from the broadcasting channel, information of this spatial channel is not quantized, and the spatial channel direction vector indicator and the spatial channel quality indicator of this spatial channel are not fed back; and
the indicator of channel direction vector number and used codebook as the feedback information only indicates a number of spatial channels needed to be fed back.

7. A device for feeding back spatial channel state, comprising:

   a scheduling probability determination unit configured for determining a probability of being scheduled of a spatial channel;
   a feedback information determination unit configured for determining feedback information according to the probability of being scheduled of the spatial channel; and
   a transmission unit configured for transmitting the determined feedback information;
   wherein more feedback information is used for a spatial channel having a high probability of being scheduled than that for a spatial channel having a low probability of being scheduled.

8. The device for feeding back spatial channel state according to claim 7, wherein the feedback information comprises an indicator of channel direction vector number and used codebook, a spatial channel direction vector indicator and a spatial channel quality indicator.

9. The device for feeding back spatial channel state according to claim 8, wherein the scheduling probability determination unit:

   obtains a spatial channel matrix H through channel estimation;
   conducts a singular value decomposition for the spatial channel matrix H;
   arranges singular values $\sigma_1 \ge \sigma_2 \ge \cdots \ge \sigma_L$ in a descending order, wherein L indicates a number of antennas of a mobile station; and

calculates respectively $\dfrac{\sigma_i}{\sigma_1}\left(1 \le i \le L\right)$ as the probability of being scheduled of each spatial channel.

10. The device for feeding back spatial channel state according to claim 9, further comprising:

   a threshold interval receiving unit configured for receiving threshold intervals used by various codebooks from a broadcasting channel; and
   wherein the feedback information determination unit:

      determines a quantization codebook adopted by each spatial channel direction vector according to the value of $\dfrac{\sigma_i}{\sigma_1}\left(1 \le i \le L\right)$

      and the threshold intervals used by various codebooks received from the broadcasting channel; and
      determines the indicator of channel direction vector number and used codebook according to the determined quantization codebook adopted by each spatial channel direction vector.

Figure 1

Figure 2

| NCI | CDI$_1$ | CQI$_1$ | $\cdots$ | $\cdots$ | CDI$_{L-1}$ | CQI$_{L-1}$ | CDI$_L$ | CQI$_L$ |
|-----|---------|---------|----------|----------|-------------|-------------|---------|---------|

Figure 3

obtaining a threshold $T_k$ of an interval used by each codebook — 401

obtaining a channel state H through channel estimation — 402

conducting a singular value decomposition for channel H, arranging eigenvalues $\sigma_1 \geq \sigma_2 \geq \cdots \geq \sigma_n$ and calculating respectively a ratio of $\dfrac{\sigma_i}{\sigma_1}$ — 403

selecting corresponding quantization codebook according to the ratio of $\dfrac{\sigma_i}{\sigma_1}$ and the interval threshold $T_k$ — 404

obtaining NCI needed to be fed back according to quantization codebooks of various spatial channels — 405

determining the fed back CDI information according to a right singular vector and a quantization codebook of a spatial channel — 406

determining CQI information needed to be fed back by each spatial channel according to a spatial channel matrix — 407

feeding back NCI/CDI/CQI information according to a defined format — 408

Figure 4

a lower resolution
codebook $\mathbf{C}_k$

a high resolution
codebook $\mathbf{C}_1$

not to be fed back

$\dfrac{\sigma_i}{\sigma_1}$

$T_1$    501    502    $T_K$    503    1

# Figure 5

610
threshold interval receiving unit

620
scheduling probability
determination unit

630
feedback information
determination unit

640
transmission unit

# Figure 6

# INTERNATIONAL SEARCH REPORT

| | |
|---|---|
| International application No. | |
| | PCT/CN2010/070139 |

**A.   CLASSIFICATION OF SUBJECT MATTER**

H04B7/04 (2006.01) i

According to International Patent Classification (IPC) or to both national classification and IPC

**B.   FIELDS SEARCHED**

Minimum documentation searched (classification system followed by classification symbols)

IPC: H04B7/-, H04Q7/-, H04W-

Documentation searched other than minimum documentation to the extent that such documents are included in the fields searched

Electronic data base consulted during the international search (name of data base and, where practicable, search terms used)

WPI; EPODOC; CPRS; CNKI: spatial, channel, state, schedule???, allocat????, assign???, probability

**C.   DOCUMENTS CONSIDERED TO BE RELEVANT**

| Category* | Citation of document, with indication, where appropriate, of the relevant passages | Relevant to claim No. |
|---|---|---|
| A | CN101411110A(QUALCOMM INCORPORATED) 19 Apr. 2009(19.04.2009) Claim 1 | 1-10 |
| A | CN1684457A(SAMSUNG ELECTRONICS CO LTD) 19 Oct. 2005(19.10.2005) the whole document | 1-10 |
| A | CN101039137A(UNIV SHANGHAI JIAOTONG ET AL) 19 Sep. 2007(19.09.2007) the whole document | 1-10 |
| A | US2009274204A1(MOTOROLA INC) 05 Nov. 2009(05.11.2009) the whole document | 1-10 |

☐ Further documents are listed in the continuation of Box C.          ☒ See patent family annex.

| | |
|---|---|
| *     Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim (S) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"document member of the same patent family |

| Date of the actual completion of the international search | Date of mailing of the international search report |
|---|---|
| 21 Sep.2010(21.09.2010) | **04 Nov. 2010 (04.11.2010)** |
| Name and mailing address of the ISA/CN The State Intellectual Property Office, the P.R.China 6 Xitucheng Rd., Jimen Bridge, Haidian District, Beijing, China 100088 Facsimile No. 86-10-62019451 | Authorized officer **WU, Zhibiao** Telephone No. (86-10)62411320 |

Form PCT/ISA /210 (second sheet) (July 2009)

**INTERNATIONAL SEARCH REPORT**
Information on patent family members

| | International application No. |
|---|---|
| | PCT/CN2010/070139 |

| Patent Documents referred in the Report | Publication Date | Patent Family | Publication Date |
|---|---|---|---|
| CN101411110A | 15.04.2009 | WO2007112371A1 | 04.10.2007 |
| | | US2007242770A1 | 18.10.2007 |
| | | US2008032630A1 | 07.02.2008 |
| | | AR060166A | 28.05.2008 |
| | | EP1999876A1 | 10.12.2008 |
| | | KR20090006127A | 14.01.2009 |
| | | TW200746681A | 16.12.2007 |
| | | CA2646504A1 | 04.10.2007 |
| | | INCHENP200804803E | 13.03.2009 |
| | | JP2009531993T | 03.09.2009 |
| | | RU2008142429A | 10.05.2010 |
| CN1684457A | 19.10.2005 | EP1564953A2 | 17.08.2005 |
| | | US2005232156A1 | 20.10.2005 |
| | | KR20050081528A | 19.08.2005 |
| | | EP1876785A2 | 09.01.2008 |
| CN101039137A | 19.09.2007 | WO2008128439A1 | 30.10.2008 |
| | | CN101039137B | 14.04.2010 |
| US2009274204A1 | 05.11.2009 | WO2009137349A2 | 12.11.2009 |
| | | WO2009137349A3 | 18.02.2010 |

Form PCT/ISA /210 (patent family annex) (July 2009)

**EP 2 525 506 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 20081038205
- WO 2009040678 A2
- US 20080165875 A1
- US 20080025336 A1
- US 20070064829 A1

**Non-patent literature cited in the description**

- **T. YOO ; N. JANDEL ; A. GOLDSMTH.** Multiple-antenna downlink channels with limited feedback and user selection. *IEEE J. Select. Areas Commun.,* September 2007, vol. 25, 1478-1491
- **PHILIPS.** Comparison between MU-MIMO codebook-based channel reporting techniques for LTE downlink. *3GPP TSG RAN WG1 Meeting #46bis*
- Scheme for MU-MIMO in DL EUTRA. 3GPP TSG RAN WG1 Meeting #47bis. Freescale Semiconductor Inc,